# EUROPEAN PATENT SPECIFICATION

(11) **EP 3 627 929 B1**
(45) Date of publication and mention of the grant of the patent: **20.04.2022**
(21) Application number: 17925423.0
(22) Date of filing: 15.09.2017
(51) Int. Cl.: H04W 72/04, H04W 4/00

(54) **RESOURCE ALLOCATION METHOD, TERMINAL DEVICE, AND NETWORK DEVICE**
RESSOURCENZUWEISUNGSVERFAHREN, ENDGERÄT UND NETZWERKVORRICHTUNG
PROCÉDÉ D'ATTRIBUTION DE RESSOURCES, DISPOSITIF TERMINAL, ET DISPOSITIF DE RÉSEAU

(43) Date of publication of application: 25.03.2020
(73) Proprietor: GUANGDONG OPPO MOBILE TELECOMMUNICATIONS CORP., LTD., Wusha, Chang'an Dongguan, Guangdong 523860 (CN)
(72) Inventor: TANG, Hai, Dongguan Guangdong 523860 (CN)
(74) Representative: Manitz Finsterwald Patent- und Rechtsanwaltspartnerschaft mbB
(86) International application number: PCT/CN2017/101919
(87) International publication number: WO 2019/051792

(56) References cited:
- EP-A1- 2 903 393
- EP-A1- 3 051 911
- EP-A1- 3 217 759
- WO-A1-2016/181095
- WO-A1-2017/091980
- WO-A1-2017/099828
- CN-A- 105 554 689
- CN-A- 106 559 877
- CN-A- 107 040 557
- US-A1- 2012 300 662
- US-A1- 2017 150 490
- US-A1- 2017 230 918
- ZTE: "Some considerations on multi-carrier and multi-operator support for V2V scenarios", 3GPP TSG-RAN WG2 Meeting #93bis, R2-162396, 1 April 2016 (2016-04-01), XP051082081,
- ZTE: "Consideration CA on PC5 carrier", 3GPP TSG RAN WG1 Meeting #89, R1-1707211, 15 May 2016 (2016-05-15), XP051272426,

## Description

### TECHNICAL FIELD

The application relates to the field of communications, and more particularly to a method for resource allocation, a terminal device and a network device.

### BACKGROUND

Vehicle to Everything (V2X) services have multiple service types. In 3rd Generation Partnership Project (3GPP) Release-14 (Rel-14), V2X services may be divided into security-related services and non-security-related services based on security features. A new Enhanced V2X (eV2X) service type, including formation driving, remote driving, sensor data sharing and the like, is introduced into 3GPP Rel-15. For different service types, for example, the eV2X service type, data transmission under 3GPP Rel-15 may be implemented through a Carrier Aggregation (CA) mechanism for dedicated carriers to improve a throughput and reliability of a V2X service. The dedicated carriers are configured to transmit Sidelinks (SLs) between different terminal devices only. However, the present CA mechanism for dedicated carriers restricts the types of carrier and further limits the transmission capability of services.

WO 2016/181095 A1 discloses allocating resources for a device-to-device transmission.

### SUMMARY

The application provides a method for resource allocation, a terminal device and a network device, which may allocate a carrier resource more flexibly and increase a utilization rate of resources. The invention is defined by the independent claims.

A first aspect provides a method for resource allocation, as described in any one of claims 1-7.

A second aspect provides a method for resource allocation as described in claim 8.

A third aspect provides a terminal device as described in any one of claims 9 to 12.

A fourth aspect provides a network device as described in any one of claims 13-15.

### BRIEF DESCRIPTION OF DRAWINGS

FIG. 1 is a schematic flowchart of a method for resource allocation according to an embodiment of the application.
FIG. 2 is another schematic flowchart of a method for resource allocation according to an embodiment of the application.
FIG. 3 is still another schematic flowchart of a method for resource allocation according to an embodiment of the application.
FIG. 4 is a schematic block diagram of a terminal device according to an embodiment of the application.
FIG. 5 is a schematic block diagram of a network device according to an embodiment of the application.
FIG. 6 is another schematic block diagram of a terminal device according to an embodiment of the application.
FIG. 7 is another schematic block diagram of a network device according to an embodiment of the application.

### DETAILED DESCRIPTION

The technical solutions in the embodiments of the application will be described below in combination with the drawings.

The technical solutions of the embodiments of the application may be applied to various communication systems, for example, a Long Term Evolution (LTE) system, an LTE Frequency Division Duplex (FDD) system, an LTE Time Division Duplex (TDD) system, a Universal Mobile Telecommunication System (UMTS) or a future 5th Generation (5G) system, i.e., New Radio (NR).

In the embodiments of the application, a terminal device may refer to user equipment, an access terminal, a user unit, a user station, a mobile station, a mobile radio station, a remote station, a remote terminal, a mobile device, a user terminal, a terminal, a wireless communication device, a user agent or a user device. The terminal device may be a cell phone, a cordless phone, a Session Initiation Protocol (SIP) phone, a Wireless Local Loop (WLL) station, a Personal Digital Assistant (PDA), a handheld device with a wireless communication function, a computing device or other processing devices connected to a wireless modem, a vehicle device, a wearable device, a terminal device in a future 5G network, a terminal device in a future evolved Public Land Mobile Network (PLMN) or the like. There are no limits made thereto in the embodiments of the application.

In the embodiments of the application, a network device may be a device configured to communicate with the terminal device. The network device may be an Evolutional Node B (eNB or eNodeB) in the LTE system, or may also be a wireless controller in a Cloud Radio Access Network (CRAN) scenario. Or the network device may be a relay station, an access point, a vehicle device, a wearable device, a network device in the future 5G network, a network device in the future evolved PLMN or the like. There are no limits made in the embodiments of the application.

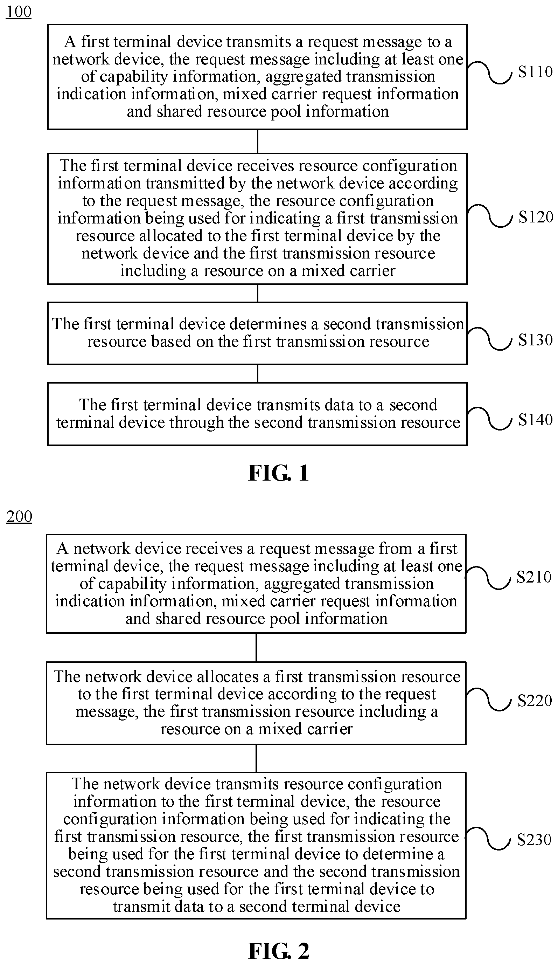

FIG. 1 is a schematic flowchart of a method 100 for resource allocation according to an embodiment of the application. The method 100 may be executed by a terminal device. As shown in FIG. 1, the method 100 includes that: a first terminal device transmits a request message to a network device, the request message including at least one of capability information, aggregated transmission indication information, mixed carrier request information and shared resource pool information.

The capability information is used for indicating that the first terminal device supports use of multiple carriers, the aggregated transmission indication information is used for the first terminal device to request for use of the multiple carriers, the mixed carrier request information is used for requesting the network device to allocate the multiple carriers to the first terminal device, and the shared resource pool information is used for indicating a shared resource pool corresponding to a dedicated carrier of the first terminal device.

It is to be understood that the multiple carriers may have at least two types. The at least two types of the multiple carriers may include a mixed carrier (or called Uu carrier) and the dedicated carrier (or called Prose Control 5 (PC5) carrier). The mixed carrier may be configured for a UL, a DL and an SL and the dedicated carrier is configured for an SL only.

It is to be understood that the SL may represent data transmission between different terminal devices, and the UL and the DL may represent transmission between the terminal device and the network device.

In an embodiment of the application, a resource on the mixed carrier is allocated to the terminal device by the network device; and a resource on the dedicated carrier is not allocated by the network device and, for example, may be obtained by the terminal device by contention or the like.

It is to be understood that, since the mixed carrier may be configured for UL transmission and SL transmission of the terminal device and the dedicated carrier may also be configured for SL transmission of the terminal device, the mixed carrier and the dedicated carrier might be unlikely to coordinate in a time domain. According to the method 100 of the embodiment of the application, the network device may be requested through the request message transmitted to the network device by the first terminal device to configure a resource of the mixed carrier for the first terminal device, and then the first terminal device determines, based on the resource configured by the network device, the resource on the mixed carrier and resource on the dedicated carrier for data transmission with other terminal devices, so that CA of the mixed carrier and the dedicated carrier can be implemented.

In an embodiment of the application, the request message transmitted to the network device by the first terminal may include shared resource pool information, and the shared resource pool information is used for indicating a shared resource pool corresponding to the dedicated carrier of the first terminal device; the dedicated carrier of the first terminal device is configured for data transmission on an SL between the first terminal device and another terminal device. Specifically, the shared resource pool information may include information about the dedicated carrier of the first terminal device and may also include time-domain information of the shared resource pool; the time-domain information being used for indicating a time-domain resource on the shared resource pool.

Optionally, the request message may include the shared resource pool information and may further include a first valid time, and the first valid time may be for indicating a valid time of the shared resource pool of the first terminal device. The network device may determine a valid time period of the shared resource pool according to the first valid time.

As shown in FIG. 1, the method 100 further includes an operation S120 that, the first terminal device receives resource configuration information transmitted according to the request message by the network device, the resource configuration information being used for indicating a first transmission resource allocated to the first terminal device by the network device and the first transmission resource including a resource on the mixed carrier.

Specifically, after the first terminal device transmits the request message to the network device, the network device may configure a first transmission resource for the first terminal device according to the request message. The network device may configure, for the first terminal device, the first transmission resource which includes the resource on the mixed carrier according to the request message. The resource on the mixed carrier may be a semi-persistent transmission resource, and the resource on the mixed carrier may also be a resource pool configured for the first terminal device by the network device. The embodiment of the application is not limited thereto.

Optionally, the first terminal device may receive the resource configuration information from the network device, and the resource configuration information may be used for indicating the first transmission resource. Optionally, the resource configuration information may further include a second valid time, the second valid time may be for indicating a valid time of the first transmission resource, and the first terminal device may determine a valid time period of the first transmission resource according to the second valid time.

As shown in FIG. 1, the method 100 further includes the following operations. In the operation S130, the first terminal device determines a second transmission resource based on the first transmission resource. In the operation S140, the first terminal device transmits data to a second terminal device through the second transmission resource.

It is to be understood that the first terminal device may determine the first transmission resource allocated by the network device according to the resource configuration information and determine the second transmission resource based on the first transmission resource. The second transmission resource is configured for data transmission between the first terminal device and another terminal device. For example, the first terminal device may transmit the data to the second terminal device by use of the second transmission resource, the second terminal device being any other terminal device than the first terminal device.

Optionally, the first terminal device may determine the second transmission resource from the first transmission resource. Specifically, the first terminal device selects part or all of resources as the second transmission resource based on the first transmission resource configured by the network device.

The first terminal device may also determine the second transmission resource based on the first transmission resource and according to a preset rule. Specifically, the preset rule may be at least one of a CBR (channel busy ratio) result, priority of a service with the second terminal device, and a capability of the first terminal device in simultaneous transmission of the multiple carriers. All or part of the first transmission resource together with part of the resource on the dedicated carrier of the first terminal device may be selected by the first terminal device as the second transmission resource. The embodiment of the application is not limited thereto.

The first terminal device may also determine a time-domain resource of the second transmission resource according to transmission power. For example, when the transmission power of the first terminal device is larger than or equal to preset power, the second transmission resource determined by the first terminal device may overlap in the time domain, namely multiple carriers of the second transmission resource overlap in the time domain; while when the transmission power of the first terminal device is lower than the preset power, the second transmission resource determined by the first terminal device does not overlap in the time domain, namely the multiple carriers of the second transmission resource do not overlap in the time domain. The preset power may be set with different values under practical conditions. The embodiment of the application is not limited thereto.

For example, the first terminal device may select resources of multiple target carriers as the second transmission resource based on its capability in simultaneous transmission of the multiple carriers corresponding to the UL and the SL and the priority of the service with the second terminal device and based on the first transmission resource configured by the network device and the shared resource pool corresponding to the first terminal device, and then determine whether the multiple target carriers overlap in the time domain or not according to the transmission power of the first terminal device.

Optionally, the method 100 may further include that: the first terminal device receives data transmitted by a third terminal device using a third transmission resource. The third transmission resource may also include a mixed carrier, and the third terminal device is any other terminal device than the first terminal device.

It is to be understood that the first terminal device may determine the third transmission resource according to system information broadcast by the network device or determine the third transmission resource by pre-configuration. However, the embodiment of the application is not limited thereto.

Accordingly, in the method for resource allocation of the embodiment of the application, a terminal device requests a network device through a request message transmitted to the network device to allocate a resource on a mixed carrier, and then the terminal device may transmit data to other terminal devices by use of the resources on both the mixed carrier and a dedicated carrier. Therefore, flexible resource configuration is implemented, and a utilization rate of resources is increased.

The method for resource allocation according to the embodiment of the application is described above in combination with FIG. 1 in detail from the angle of the terminal device. The method for resource allocation according to an embodiment of the application will be described below in combination with FIG. 2 from the angle of the network device.

FIG. 2 is a schematic flowchart of a method 200 for resource allocation according to an embodiment of the application. The method 200 may be executed by a network device. As shown in FIG. 2, the method 200 includes the following operations. In the operation S210, the network device receives a request message from a first terminal device; the request message includes at least one of capability information, aggregated transmission indication information, mixed carrier request information and shared resource pool information; the capability information is used for indicating that the first terminal device supports use of multiple carriers, the aggregated transmission indication information is used for the first terminal device to request for use of the multiple carriers, the mixed carrier request information is for requesting the network device to allocate the multiple carriers to the first terminal device, the shared resource pool information is used for indicating a shared resource pool corresponding to a dedicated carrier of the first terminal device; the multiple carriers have at least two types, and the multiple carriers include a mixed carrier and the dedicated carrier, the mixed carrier is configured for a UL, a DL and an SL, the dedicated carrier is configured for an SL only, the SL representing data transmission between different terminal devices. In the operation S220, the network device allocates a first transmission resource to the first terminal device according to the request message, and the first transmission resource includes a resource on the mixed carrier. In the operation S230, the network device transmits resource configuration information to the first terminal device; the resource configuration information is used for indicating the first transmission resource, the first transmission resource is used for the first terminal device to determine a second transmission resource, and the second transmission resource is used for the first terminal device to transmit data to a second terminal device.

Accordingly, in the method for resource allocation of the embodiment of the application, a network device receives a request message from a terminal device and allocates a resource on a mixed carrier to the terminal device according to the request message to enable the terminal device to transmit data to another terminal device by use of resources on both the mixed carrier and the dedicated carrier. Therefore, flexible resource configuration is implemented, and a utilization rate of resources is increased.

Optionally, the request message may include the shared resource pool information and a first valid time, the first valid time being for indicating a valid time of the shared resource pool.

Optionally, the resource configuration information may include a second valid time, the second valid time being for indicating a valid time of the first transmission resource.

Optionally, the shared resource pool information may include time-domain information of the shared resource pool.

Optionally, the request message may include the shared resource pool information, and the operation that the network device allocates the first transmission resource to the first terminal device according to the request message may include that: the network device determines the first transmission resource which does not overlap with a resource in the shared resource pool in a time domain according to the shared resource pool information.

It is to be understood that the network device in the method 200 may correspond to the network device in the method 100, and the first terminal device in the method 200 may correspond to the first terminal device in the method 100. Elaborations are not repeated herein.

Accordingly, in the method for resource allocation of the embodiment of the application, the network device receives a request message from the terminal device and allocates a resource on a mixed carrier to the terminal device according to the request message to enable the terminal device to transmit data to another terminal device by use of the resources on both the mixed carrier and a dedicated carrier. Therefore, flexible resource configuration is implemented, and the utilization rate of resources is increased.

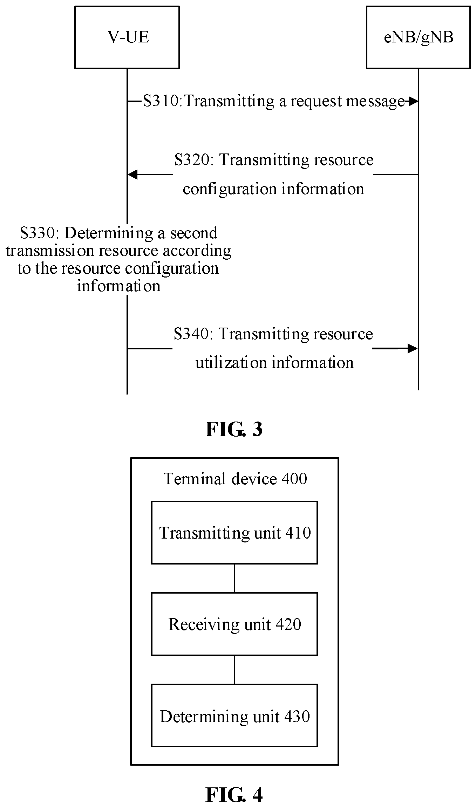

The method for resource allocation according to the embodiments of the application is described above in combination with FIG. 1 to FIG. 2 in detail from the angle of the terminal device and the network device. The method for resource allocation according to an embodiment of the application will be described below in combination with FIG. 3 from the angle of interaction between devices.

FIG. 3 is a schematic flowchart of a method 300 for resource allocation according to an embodiment of the application. As shown in FIG. 3, the method 300 includes the following operations. In the operation S310, a terminal device (Vehicle User Equipment (V-UE) transmits a request message to a network device (eNB/gNB). The request message may include at least one of capability information, aggregated transmission indication information, mixed carrier request information and shared resource pool information.

The capability information is used for indicating that the terminal device supports use of multiple carriers, the aggregated transmission indication information is used for the terminal device to request for use of the multiple carriers, the mixed carrier request information is used for requesting the network device to allocate the multiple carriers to the terminal device, the shared resource pool information is used for indicating a shared resource pool corresponding to a dedicated carrier of the terminal device, the multiple carriers include at least two types, the multiple carriers include a mixed carrier and the dedicated carrier, the mixed carrier may be configured for a UL, a DL and an SL, the dedicated carrier is configured for the SL only, and the SL represents data transmission between different terminal devices.

In the operation S320, the network device allocates a first transmission resource to the terminal device according to the request message and transmits resource configuration information to the terminal device, the resource configuration information being used for indicating the first transmission resource.

It is to be understood that the first transmission resource may include a resource of the mixed carrier.

Optionally, the network device may transmit the resource configuration information through a Uu interface between itself and the terminal device.

In the operation S330, the terminal device may determine the first transmission resource allocated by the network device according to the resource configuration information and determine a second transmission resource based on the first transmission resource. The second transmission resource may include multiple carriers, and the multiple carriers may include mixed carriers and dedicated carriers.

It is to be understood that the terminal device may select a dedicated carrier and a mixed carrier within a specific time as a second transmission carrier. For example, when transmission power of the first terminal device is larger than or equal to preset power, the second transmission resource determined by the first terminal device may overlap in a time domain, namely the multiple carriers of the second transmission resource overlap in the time domain; and when the transmission power of the first terminal device is lower than the preset power, the second transmission resource determined by the first terminal device does not overlap in the time domain, namely the multiple carriers of the second transmission resource do not overlap in the time domain.

It is to be understood that the terminal device may transmit data to another terminal device through the second transmission resource, and the another terminal device may be any other terminal device than the first terminal device.

In the operation S340, the terminal device may transmit resource utilization information to the network device to report a utilization condition of the dedicated carrier of the terminal device to the network device through the resource utilization information.

Accordingly, in the method for resource allocation of the embodiment of the application, a terminal device requests a network device through a request message transmitted to the network device to allocate a resource on a mixed carrier, and then the terminal device may transmit data to another terminal device by use of resources on both the mixed carrier and a dedicated carrier. Therefore, flexible resource configuration is implemented, and a utilization rate of resources is increased.

It is to be understood that, in various embodiments of the application, a magnitude of a sequence number of each process does not mean an execution sequence, and the execution sequence of each process may be determined by its function and an internal logic and should not form any limit to implementations of the embodiments of the application.

The method for resource allocation according to the embodiments of the application is described above in combination with FIG. 1 to FIG. 3 in detail. A device for resource allocation according to the embodiments of the application will be described below in combination with FIG. 4 to FIG. 7.

As shown in FIG. 4, a terminal device 400 according to an embodiment of the application includes a transmitting unit 410, a receiving unit 420 and a determining unit 430.

Specifically, the transmitting unit 410 is configured to transmit a request message to a network device. The request message includes at least one of capability information, aggregated transmission indication information, mixed carrier request information and shared resource pool information. The capability information is for indicating that the terminal device supports use of multiple carriers, the aggregated transmission indication information is used for the terminal device to request for use of the multiple carriers, the mixed carrier request information is used for requesting the network device to allocate the multiple carriers to the terminal device, the shared resource pool information is used for indicating a shared resource pool corresponding to a dedicated carrier of the terminal device. The multiple carriers have at least two types of carries, including a mixed carrier and the dedicated carrier. The mixed carrier is configured for a UL, a DL and an SL, the dedicated carrier is configured for the SL only, and the SL represents data transmission between different terminal devices. The receiving unit 420 is configured to receive resource configuration information transmitted by the network device according to the request message, the resource configuration information being used for indicating a first transmission resource allocated to the terminal device by the network device, and the first transmission resource including a resource on the mixed carrier. The determining unit 430 is configured to determine a second transmission resource based on the first transmission resource. The transmitting unit 410 is further configured to transmit data to a second terminal device through the second transmission resource.

Accordingly, the terminal device of the embodiment of the application requests the network device through the request message transmitted to the network device to allocate the resource on the mixed carrier, and then the terminal device may transmit the data to another terminal device by use of resources on both the mixed carrier and the dedicated carrier. Therefore, flexible resource configuration is implemented, and a utilization rate of resources is increased.

Optionally, the request message may include the shared resource pool information and a first valid time, the first valid time being for indicating a valid time of the shared resource pool.

Optionally, the resource configuration information may include a second valid time, the second valid time being for indicating a valid time of the first transmission resource.

Optionally, the shared resource pool information may include time-domain information of the shared resource pool.

Optionally, the first transmission resource does not overlap with a resource in the shared resource pool in a time domain.

When transmission power of the terminal device is larger than or equal to preset power, multiple carriers in the second transmission resource overlap in the time domain, and/or, when the transmission power of the terminal device is lower than the preset power, the multiple carriers in the second transmission resource do not overlap in the time domain.

Optionally, the determining unit 430 may be specifically configured to determine the second transmission resource from the first transmission resource.

Optionally, the determining unit 430 may be specifically configured to determine the second transmission resource based on the first transmission resource and according to a preset rule, the preset rule including at least one of a CBR result, priority of a service between the terminal device 400 the second terminal device, and a capability of the terminal device 400 in simultaneous transmission of the multiple carriers.

Optionally, the receiving unit 420 may be further configured to receive data transmitted by a third terminal device using a third transmission resource, the third transmission resource including the mixed carrier.

Optionally, the third transmission resource may be a resource configured for the third terminal device by the network device.

It is to be understood that the terminal device 400 according to the embodiment of the application may correspondingly execute the method 100 in the embodiment of the application. The above-mentioned and other operations and/or functions of each unit in the terminal device 400 are adopted to implement the corresponding flows executed by the terminal device in each method in FIG. 1 to FIG. 3 respectively and will not be elaborated herein for simplicity.

Accordingly, the terminal device of the embodiment of the application requests the network device through a request message transmitted to the network device to allocate a resource on a mixed carrier, and then the terminal device may transmit data to another terminal device by use of the resources on both the mixed carrier and the dedicated carrier. Therefore, flexible resource configuration is implemented, and the utilization rate of resources is increased.

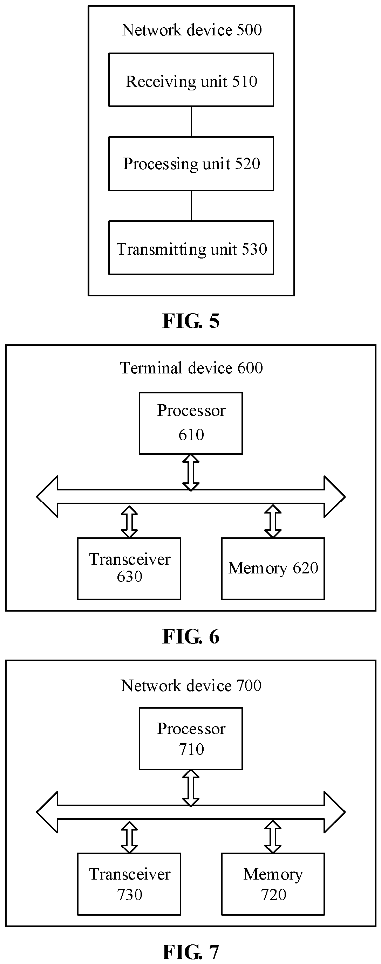

As shown in FIG. 5, a network device 500 according to an embodiment of the application includes a receiving unit 510, a processing unit 520 and a transmitting unit 530.

Specifically, the receiving unit 510 is configured to receive a request message from a first terminal device, the request message including at least one of capability information, aggregated transmission indication information, mixed carrier request information and shared resource pool information. The capability information is used for indicating that the first terminal device supports use of multiple carriers, the aggregated transmission indication information is used for the first terminal device to request for use of the multiple carriers, the mixed carrier request information is used for requesting the network device to allocate the multiple carriers to the first terminal device, the shared resource pool information is used for indicating a shared resource pool corresponding to a dedicated carrier of the first terminal device. The multiple carriers have at least two types, including a mixed carrier and the dedicated carrier. The mixed carrier is configured for a UL, a DL and an SL, the dedicated carrier is configured for the SL only, and the SL represents data transmission between different terminal devices. The processing unit 520 is configured to allocate a first transmission resource to the first terminal device according to the request message, the first transmission resource including a resource on the mixed carrier. The transmitting unit 530 is configured to transmit resource configuration information to the first terminal device, the resource configuration information being used for indicating the first transmission resource, the first transmission resource being used for the first terminal device to determine a second transmission resource, and the second transmission resource being used for the first terminal device to transmit data to a second terminal device.

Accordingly, the network device of the embodiment of the application receives a request message from the terminal device and allocates a resource on a mixed carrier to the terminal device according to the request message to enable the terminal device to transmit data to another terminal device by use of resources on both the mixed carrier and a dedicated carrier. Therefore, flexible resource configuration is implemented, and a utilization rate of resources is increased.

Optionally, the request message may include the shared resource pool information and a first valid time, the first valid time being for indicating a valid time of the shared resource pool.

Optionally, the resource configuration information may include a second valid time, the second valid time being for indicating a valid time of the first transmission resource.

Optionally, the shared resource pool information may include time-domain information of the shared resource pool.

Optionally, the request message may include the shared resource pool information, and the processing unit 520 is specifically configured to determine the first transmission resource which does not overlap with a resource in the shared resource pool in a time domain according to the shared resource pool information.

It is to be understood that the network device 500 according to the embodiment of the application may correspondingly execute the method 200 in the embodiment of the application. The above-mentioned and other operations and/or functions of each unit in the network device 500 are adopted to implement the corresponding flows executed by the network device in each method in FIG. 1 to FIG. 3 respectively and will not be elaborated herein for simplicity.

Accordingly, the network device of the embodiment of the application receives a request message from the terminal device and allocates a resource on a mixed carrier to the terminal device according to the request message to enable the terminal device to transmit data to the other terminal device by use of the resources on both the mixed carrier and the dedicated carrier. Therefore, flexible resource configuration is implemented, and the utilization rate of resources is increased.

FIG. 6 is a schematic block diagram of a terminal device 600 according to an embodiment of the application. As shown in FIG. 6, the terminal device 600 includes: a processor 610 and a transceiver 620. The processor 610 may be connected with the transceiver 620. Optionally, the terminal device 600 may further include a memory 630. The memory 630 may be connected with the processor 610. The processor 610, the memory 630 and the transceiver 620 may communicate with one another through an internal connecting path to transmit control and/or data signals. The memory 630 may be configured to store an instruction. The processor 610 is configured to execute the instruction stored in the memory 630 to control the transceiver 620 to transmit information or signals. The transceiver 620 is configured to transmit a request message to a network device, the request message including at least one of capability information, aggregated transmission indication information, mixed carrier request information and shared resource pool information. The capability information is used for indicating that the terminal device supports use of multiple carriers, the aggregated transmission indication information is used for the terminal device to request for use of the multiple carriers, the mixed carrier request information is used for requesting the network device to allocate the multiple carriers to the terminal device, the shared resource pool information is used for indicating a shared resource pool corresponding to a dedicated carrier of the terminal device. The multiple carriers have at least two types of carriers, including a mixed carrier and the dedicated carrier; the mixed carrier is configured for a UL, a DL and an SL, the dedicated carrier is configured for the SL only, and the SL represents data transmission between different terminal devices. The transceiver 620 is further configured to receive resource configuration information transmitted by the network device according to the request message, the resource configuration information being used for indicating a first transmission resource allocated to the terminal device by the network device, and the first transmission resource including a resource on the mixed carrier. A determining unit 430 is configured to determine a second transmission resource based on the first transmission resource. The processor 610 is configured to transmit data to a second terminal device through the second transmission resource.

Accordingly, the terminal device of the embodiment of the application requests the network device through a request message transmitted to the network device to allocate the resource on a mixed carrier, and then the terminal device may transmit data to another terminal device by use of resources on both the mixed carrier and the dedicated carrier. Therefore, flexible resource configuration is implemented, and a utilization rate of resources is increased.

Optionally, as an embodiment, the request message may include the shared resource pool information and a first valid time, the first valid time being for indicating a valid time of the shared resource pool.

Optionally, as an embodiment, the resource configuration information may include a second valid time, the second valid time being for indicating a valid time of the first transmission resource.

Optionally, as an embodiment, the shared resource pool information may include time-domain information of the shared resource pool.

Optionally, as an embodiment, the first transmission resource does not overlap with a resource in the shared resource pool in a time domain.

When transmission power of the terminal device is larger than or equal to preset power, multiple carriers in the second transmission resource may overlap in the time domain, and/or, when the transmission power of the terminal device is lower than the preset power, the multiple carriers in the second transmission resource may not overlap in the time domain.

Optionally, as an embodiment, the processor 610 is configured to determine the second transmission resource from the first transmission resource.

Optionally, as an embodiment, the processor 610 is configured to determine the second transmission resource based on the first transmission resource and according to a preset rule, the preset rule including at least one of a CBR result, priority of a service with the second terminal device and a capability of the terminal device in simultaneous transmission of the multiple carriers.

Optionally, as an embodiment, the transceiver 620 is configured to receive data transmitted by a third terminal device using a third transmission resource, the third transmission resource including the mixed carrier.

Optionally, as an embodiment, the third transmission resource may be a resource configured for the third terminal device by the network device.

It is to be understood that the terminal device 600 according to the embodiment of the application may correspond to the terminal device 400 in the embodiment of the application and may correspond to a body executing the method 100 according to the embodiment of the application. The above-mentioned and other operations and/or functions of each unit in the terminal device 600 are adopted to implement the corresponding flows of the terminal device in each method in FIG. 1 to FIG. 3 respectively and will not be elaborated herein for simplicity.

Accordingly, the terminal device of the embodiment of the application requests the network device through a request message transmitted to the network device to allocate a resource on a mixed carrier, and then the terminal device may transmit data to another terminal device by use of the resources on both the mixed carrier and a dedicated carrier. Therefore, flexible resource configuration is implemented, and the utilization rate of resources is increased.

FIG. 7 is a schematic block diagram of a network device 700 according to an embodiment of the application. As shown in FIG. 7, the network device 700 includes: a processor 710 and a transceiver 720. The processor 710 may be connected with the transceiver 720. Optionally, the network device 700 may further include a memory 730. The memory 730 may be connected with the processor 710. The processor 710, the memory 730 and the transceiver 720 may communicate with one another through an internal connecting path to transmit control and/or data signals. The memory 730 may be configured to store an instruction. The processor 710 is configured to execute the instruction stored in the memory 730 to control the transceiver 720 to transmit information or signals. The transceiver 720 is configured to receive a request message transmitted by a first terminal device, the request message including at least one of capability information, aggregated transmission indication information, mixed carrier request information and shared resource pool information. The capability information is used for indicating that the first terminal device supports use of multiple carriers, the aggregated transmission indication information is used for the first terminal device to request for use of the multiple carriers, the mixed carrier request information is used for requesting the network device to allocate the multiple carriers to the first terminal device, the shared resource pool information is used for indicating a shared resource pool corresponding to a dedicated carrier of the first terminal device. The multiple carriers have at least two types of carriers, including a mixed carrier and the dedicated carrier, the mixed carrier being configured for a UL, a DL and an SL, the dedicated carrier being configured for the SL only and the SL representing data transmission between different terminal devices. The processor 710 is configured to allocate a first transmission resource to the first terminal device according to the request message, the first transmission resource including a resource on the mixed carrier. The transceiver 720 is further configured to transmit resource configuration information to the first terminal device, the resource configuration information being used for indicating the first transmission resource, the first transmission resource being configured for the first terminal device to determine a second transmission resource, and the second transmission resource being configured for the first terminal device to transmit data to a second terminal device.

Accordingly, the network device of the example of the application receives a request message from the terminal device and allocates a resource on a mixed carrier to the terminal device according to the request message to enable the terminal device to transmit data to another terminal device by use of resources on both the mixed carrier and the dedicated carrier. Therefore, flexible resource configuration is implemented, and a utilization rate of resources is increased.

Optionally, as an example, the request message may include the shared resource pool information and a first valid time, the first valid time being for indicating a valid time of the shared resource pool.

Optionally, as an example, the resource configuration information may include a second valid time, the second valid time being for indicating a valid time of the first transmission resource.

Optionally, as an example, the shared resource pool information may include time-domain information of the shared resource pool.

Optionally, as an example, the request message may include the shared resource pool information, and the processor 710 is configured to determine the first transmission resource which does not overlap with a resource in the shared resource pool in a time domain according to the shared resource pool information.

It is to be understood that the network device 700 according to the example of the application may correspond to the network device 500 in the embodiment of the application and may correspond to a body executing the method 200 according to the example of the application. The above-mentioned and other operations and/or functions of each unit in the network device 700 are adopted to implement the corresponding flows executed by the network device in each method in FIG. 1 to FIG. 3 respectively and will not be elaborated herein for simplicity.

Accordingly, the network device of the example of the application receives a request message transmitted by the terminal device and allocates a resource on a mixed carrier to the terminal device according to the request message to enable the terminal device to transmit data to the other terminal device by use of the resources on both the mixed carrier and a dedicated carrier. Therefore, flexible resource configuration is implemented, and the utilization rate of resources is increased.

It is to be noted that the method examples of the application may be applied to a processor or implemented by a processor. The processor may be an integrated circuit chip with a signal processing capability. In an implementation process, each operation of the method embodiments may be completed by an integrated logical circuit of hardware in the processor or an instruction in a software form. The processor may be a universal processor, a Digital Signal Processor (DSP), an Application Specific Integrated Circuit (ASIC), a Field Programmable Gate Array (FPGA) or another programmable logical device, discrete gate or transistor logical device and discrete hardware component. Each method, operation and logical block diagram described in the embodiments of the application may be implemented or executed. The universal processor may be a microprocessor or any conventional processor and the like. The operations of the method described in combination with the embodiments of the application may be directly executed and completed by a hardware decoding processor or executed and completed by a combination of hardware and software modules in the decoding processor. The software module may be located in a mature storage medium in this field such as a Random Access Memory (RAM), a flash memory, a Read-Only Memory (ROM), a Programmable ROM (PROM) or Electrically Erasable PROM (EEPROM) and a register. The storage medium may be arranged in a memory, and the processor may read information from the memory, and complete the operations of the methods in combination with hardware.

It can be understood that the memory in the example of the application may be a volatile memory or a nonvolatile memory, or may include both the volatile and nonvolatile memories. The nonvolatile memory may be a ROM, a PROM, an Erasable PROM (EPROM), an EEPROM or a flash memory. The volatile memory may be a RAM, and is used as an external high-speed cache. It is exemplarily but unlimitedly described that RAMs in various forms may be adopted, such as a Static RAM (SRAM), a Dynamic RAM (DRAM), a Synchronous DRAM (SDRAM), a Double Data Rate SDRAM (DDRSDRAM), an Enhanced SDRAM (ESDRAM), a Synchlink DRAM (SLDRAM) and a Direct Rambus RAM (DR RAM). It is to be noted that the memory of a system and method described in the disclosure is intended to include, but not limited to, memories of these and any other proper types.

Those of ordinary skill in the art may realize that the units and algorithm steps of each example described in combination with the examples in the disclosure may be implemented by electronic hardware or a combination of computer software and the electronic hardware. Whether these functions are executed by hardware or software depends on specific applications and design constraints of the technical solutions. Professionals may realize the described functions for each specific application by use of different methods, but such realization shall fall within the scope of the application.

Those skilled in the art may clearly learn about that specific operating processes of the system, device and unit described above may refer to the corresponding processes in the method embodiment and will not be elaborated herein for convenient and brief description.

In some examples provided by the application, it is to be understood that the disclosed system, device and method may be implemented in other manners. For example, the device examples described above are schematic only. For example, division of the units is logic function division only, and other division manners may be adopted during practical implementation. For example, multiple units or components may be combined or integrated into another system, or some characteristics may be neglected or not executed. In addition, coupling or direct coupling or communication connection between each displayed or discussed component may be indirect coupling or communication connection, implemented through some interfaces, of the device or the units, and may be electrical and mechanical or adopt other forms.

The units described as separate parts may or may not be physically separated, and the parts displayed as units may or may not be physical units, and namely may be located in the same place, or may also be distributed to multiple network units. Part or all of the units may be selected to achieve the purpose of the solutions of the embodiments according to a practical requirement.

In addition, each functional unit in each example of the application may be integrated into a processing unit, each unit may also physically exist independently, and two or more than two units may also be integrated into a unit.

When being realized in form of software functional unit and sold or used as an independent product, the function may also be stored in a computer-readable storage medium. Based on such an understanding, the technical solutions of the application substantially or parts making contributions to the conventional art or part of the technical solutions may be embodied in form of software product, and the computer software product is stored in a storage medium, including a plurality of instructions configured to enable a computer device (which may be a personal computer, a server, a network device or the like) to execute all or part of the steps of the method in each embodiment of the application. The storage medium includes: various media capable of storing program codes such as a U disk, a mobile hard disk, a ROM, a RAM, a magnetic disk or an optical disk.

The above are only the specific implementations of the application and not intended to limit the scope of protection of the application. Therefore, the scope of protection of the application shall be subject to the scope of protection of the claims.

## Claims

1. A method for resource allocation, comprising:
transmitting (S110), by a first terminal device, a request message to a network device,
wherein the request message comprises mixed carrier request information,
the mixed carrier request information is used for requesting the network device to allocate multiple carriers to the first terminal device,
the multiple carriers have at least two types and the multiple carriers comprise a mixed carrier and a dedicated carrier, the mixed carrier being configured for an Uplink, "UL", a Downlink, "DL", and a Sidelink, "SL", the dedicated carrier being configured for an SL only, and the SL representing data transmission between different terminal devices;
receiving (S120), by the first terminal device, resource configuration information transmitted by the network device according to the request message, wherein the resource configuration information is used for indicating a first transmission resource allocated to the first terminal device by the network device and the first transmission resource comprises a resource on the mixed carrier;
determining (S130), by the first terminal device, a second transmission resource based on the first transmission resource; and
transmitting (S140), by the first terminal device, data to a second terminal device through the second transmission resource;
**characterized in that** a time-domain resource of the second transmission resource is determined by the first terminal device according to transmission power of the first terminal device,
wherein, when the transmission power of the first terminal device is larger than or equal to preset power, multiple carriers in the second transmission resource overlap in a time domain, and/or
when the transmission power of the first terminal device is lower than the preset power, multiple carriers in the second transmission resource do not overlap in a time domain.

2. The method of claim 1, wherein the request message further comprises shared resource pool information and a first valid time, the shared resource pool information is used for indicating a shared resource pool corresponding to the dedicated carrier of the first terminal device, and the first valid time is for indicating a valid time of the shared resource pool.

3. The method of claim 1 or 2, wherein the resource configuration information comprises a second valid time, and the second valid time is for indicating a valid time of the first transmission resource.

4. The method of claim 1 or 2, wherein the shared resource pool information comprises time-domain information of the shared resource pool.

5. The method of claim 4, wherein the first transmission resource does not overlap with a resource in the shared resource pool in the time domain.

6. The method of any one of claims 1-5, wherein determining, by the first terminal device, the second transmission resource based on the first transmission resource comprises:
determining, by the first terminal device, the second transmission resource based on the first transmission resource and according to a preset rule, wherein the preset rule comprises at least one of: a Channel Busy Ratio, "CBR", result, priority of a service between the first terminal device and the second terminal device, and a capability of the first terminal device in simultaneous transmission of the multiple carriers.

7. The method of any one of claims 1-6, further comprising:
receiving, by the first terminal device, data transmitted by a third terminal device, the data being transmitted by the third terminal device using a third transmission resource, the third transmission resource comprising the mixed carrier.

8. A method for resource allocation, comprising:
receiving (S210), by a network device, a request message from a first terminal device,
wherein the request message comprises mixed carrier request information,
the mixed carrier request information is used for requesting the network device to allocate multiple carriers to the first terminal device,
the multiple carriers have at least two types and the multiple carriers comprise a mixed carrier and a dedicated carrier, the mixed carrier being configured for an Uplink, "UL", a Downlink, "DL", and a Sidelink, "SL", the dedicated carrier being configured for the SL only, and the SL representing data transmission between different terminal devices;
allocating (S220), by the network device, a first transmission resource to the first terminal device according to the request message, the first transmission resource comprising a resource on the mixed carrier; and
transmitting (S230), by the network device, resource configuration information to the first terminal device,
wherein the resource configuration information is used for indicating the first transmission resource,
the first transmission resource is configured for the first terminal device to determine a second transmission resource, and
the second transmission resource is configured for the first terminal device to transmit data to a second terminal device;
**characterized in that** a time-domain resource of the second transmission resource is determined by the first terminal device according to transmission power of the first terminal device,
wherein, when the transmission power of the first terminal device is larger than or equal to preset power, multiple carriers in the second transmission resource overlap in a time domain, and/or
when the transmission power of the first terminal device is lower than the preset power, multiple carriers in the second transmission resource do not overlap in a time domain.

9. A terminal device (400), comprising:
a transmitting unit (410), configured to transmit a request message to a network device,
wherein the request message comprises mixed carrier request information,
the mixed carrier request information is used for requesting the network device to allocate multiple carriers to the terminal device,
the multiple carriers have at least two types and the multiple carriers comprise a mixed carrier and a dedicated carrier, the mixed carrier being configured for an Uplink, "UL", a Downlink, "DL", and a Sidelink, "SL", the dedicated carrier being configured for the SL only, and the SL representing data transmission between different terminal devices;
a receiving unit (420), configured to receive resource configuration information transmitted by the network device according to the request message, wherein the resource configuration information is used for indicating a first transmission resource allocated to the terminal device by the network device, and the first transmission resource comprises a resource on the mixed carrier;
a determining unit (430), configured to determine a second transmission resource based on the first transmission resource; and
the transmitting unit is further configured to transmit data to a second terminal device through the second transmission resource;
**characterized in that** a time-domain resource of the second transmission resource is determined by the first terminal device according to transmission power of the first terminal device,
wherein when the transmission power of the terminal device is larger than or equal to a preset power, multiple carriers in the second transmission resource overlap in a time domain, and/or
when the transmission power of the terminal device is lower than the preset power, multiple carriers in the second transmission resource do not overlap in a time domain.

10. The terminal device (400) of claim 9, wherein the request message further comprises shared resource pool information and a first valid time, the shared resource pool information is used for indicating a shared resource pool corresponding to the dedicated carrier of the first terminal device, and the first valid time being for indicating a valid time of the shared resource pool.

11. The terminal device (400) of claim 9 or 10, wherein the resource configuration information comprises a second valid time, the second valid time being for indicating a valid time of the first transmission resource.

12. The terminal device (400) of claim 10 or 11, wherein the shared resource pool information comprises time-domain information of the shared resource pool.

13. A network device (500), comprising:
a receiving unit (510), configured to receive a request message from a first terminal device,
wherein the request message comprises mixed carrier request information,
the mixed carrier request information is used for requesting the network device to allocate multiple carriers to the first terminal device,
the multiple carriers have at least two types and the multiple carriers comprise a mixed carrier and a dedicated carrier, the mixed carrier being configured for an Uplink, "UL", a Downlink, "DL", and a Sidelink, "SL", the dedicated carrier being configured for the SL only, and the SL representing data transmission between different terminal devices;
a processing unit (520), configured to allocate a first transmission resource to the first terminal device according to the request message, wherein the first transmission resource comprises a resource on the mixed carrier; and
a transmitting unit (530), configured to transmit resource configuration information to the first terminal device,
wherein the resource configuration information is used for indicating the first transmission resource,
the first transmission resource is configured for the first terminal device to determine a second transmission resource, and
the second transmission resource is configured for the first terminal device to transmit data to a second terminal device;
**characterized in that** a time-domain resource of the second transmission resource is determined by the first terminal device according to transmission power of the first terminal device,
wherein, when the transmission power of the first terminal device is larger than or equal to preset power, multiple carriers in the second transmission resource overlap in a time domain, and/or
when the transmission power of the first terminal device is lower than the preset power, multiple carriers in the second transmission resource do not overlap in a time domain.

14. The network device of claim 13, wherein the request message further comprises shared resource pool information and a first valid time, the shared resource pool information is used for indicating a shared resource pool corresponding to the dedicated carrier of the first terminal device, and the first valid time is for indicating a valid time of the shared resource pool.

15. The network device of claim 13 or 14, wherein the resource configuration information comprises a second valid time, and the second valid time is for indicating a valid time of the first transmission resource.

## Patentansprüche

1. Verfahren zur Ressourcenzuweisung, umfassend:
Übertragen (S110) einer Anforderungsnachricht durch ein erstes Endgerät an eine Netzwerkvorrichtung,
wobei die Anforderungsnachricht Anforderungsinformationen gemischter Träger umfasst, wobei die Anforderungsinformationen der gemischten Träger verwendet werden, um die Netzwerkvorrichtung aufzufordern, dem ersten Endgerät mehrere Träger zuzuweisen,
die mehreren Träger mindestens zwei Typen aufweisen und die mehreren Träger einen gemischten Träger und einen dedizierten Träger umfassen, wobei der gemischte Träger für einen Uplink, "UL", einen Downlink, "DL", und einen Sidelink, "SL", ausgelegt ist, der dedizierte Träger nur für einen SL ausgelegt ist und der SL die Datenübertragung zwischen verschiedenen Endgeräten repräsentiert;
Empfangen (S120) von Ressourcenkonfigurationsinformationen, die von der Netzwerkvorrichtung gemäß der Anforderungsnachricht übertragen werden, durch das erste Endgerät, wobei die Ressourcenkonfigurationsinformationen zum Angeben einer ersten Übertragungsressource verwendet werden, die dem ersten Endgerät durch die Netzwerkvorrichtung zugewiesen wird, und die erste Übertragungsressource eine Ressource auf dem gemischten Träger umfasst;
Bestimmen (S130), durch das erste Endgerät, einer zweiten Übertragungsressource basierend auf der ersten Übertragungsressource; und
Übertragen (S140), durch das erste Endgerät, von Daten an ein zweites Endgerät durch die zweite Übertragungsressource;
**dadurch gekennzeichnet, dass** eine Zeitbereichsressource der zweiten Übertragungsressource durch das erste Endgerät gemäß der Übertragungsleistung des ersten Endgerätes bestimmt wird,
wobei, wenn die Übertragungsleistung des ersten Endgerätes größer als oder gleich einer voreingestellten Leistung ist, sich mehrere Träger in der zweiten Übertragungsressource in einem Zeitbereich überlappen, und/oder
wenn die Übertragungsleistung des ersten Endgerätes geringer ist als die voreingestellte Leistung, sich mehrere Träger in der zweiten Übertragungsressource in einem Zeitbereich nicht überlappen.

2. Verfahren nach Anspruch 1, wobei die Anforderungsnachricht ferner gemeinsam genutzte Ressourcenpoolinformationen und eine erste Gültigkeitszeit umfasst, wobei die gemeinsam genutzten Ressourcenpoolinformationen zum Angeben eines gemeinsam genutzten Ressourcenpools, der dem dedizierten Träger des ersten Endgerätes entspricht, verwendet werden, und die erste Gültigkeitszeit zum Angeben einer Gültigkeitszeit des gemeinsam genutzten Ressourcenpools dient.

3. Verfahren nach Anspruch 1 oder 2, wobei die Ressourcenkonfigurationsinformationen eine zweite Gültigkeitszeit umfassen, und die zweite Gültigkeitszeit zum Angeben einer Gültigkeitszeit der ersten Übertragungsressource dient.

4. Verfahren nach Anspruch 1 oder 2, wobei die gemeinsam genutzten Ressourcenpoolinformationen Zeitbereichsinformationen des gemeinsam genutzten Ressourcenpools umfassen.

5. Verfahren nach Anspruch 4, wobei sich die erste Übertragungsressource nicht mit einer Ressource im gemeinsam genutzten Ressourcenpool im Zeitbereich überlappt.

6. Verfahren nach einem der Ansprüche 1-5, wobei das Bestimmen, durch das erste Endgerät, der zweiten Übertragungsressource, basierend auf der ersten Übertragungsressource, umfasst:
Bestimmen, durch das erste Endgerät, der zweiten Übertragungsressource basierend auf der ersten Übertragungsressource und gemäß einer voreingestellten Regel, wobei die voreingestellte Regel umfasst: ein Kanalbelegungsverhältnis, CBR-, Ergebnis (CBR = Channel Busy Ratio) und/oder eine Priorität eines Dienstes zwischen dem ersten Endgerät und dem zweiten Endgerät und/oder eine Fähigkeit des ersten Endgerätes zur gleichzeitigen Übertragung der mehreren Träger.

7. Verfahren nach einem der Ansprüche 1-6, ferner umfassend:
Empfangen von Daten, die durch ein drittes Endgerät übertragen werden, durch das erste Endgerät, wobei die Daten durch das dritte Endgerät unter Verwendung einer dritten Übertragungsressource übertragen werden, wobei die dritte Übertragungsressource den gemischten Träger umfasst.

8. Verfahren zur Ressourcenzuweisung, umfassend:
Empfangen (S210), durch eine Netzwerkvorrichtung, einer Anforderungsnachricht von einem ersten Endgerät,
wobei die Anforderungsnachricht Anforderungsinformationen gemischter Trägern umfasst,
wobei die Anforderungsinformationen der gemischten Träger verwendet werden, um die Netzwerkvorrichtung aufzufordern, dem ersten Endgerät mehrere Träger zuzuweisen,
die mehreren Träger mindestens zwei Typen aufweisen und die mehreren Träger einen gemischten Träger und einen dedizierten Träger umfassen, wobei der gemischte Träger für einen Uplink, "UL", einen Downlink, "DL", und einen Sidelink, "SL", ausgelegt ist, der dedizierte Träger nur für den SL ausgelegt ist und der SL die Datenübertragung zwischen verschiedenen Endgeräten repräsentiert;
Zuweisen (S220), durch die Netzwerkvorrichtung, einer ersten Übertragungsressource an das erste Endgerät gemäß der Anforderungsnachricht, wobei die erste Übertragungsressource eine Ressource auf dem gemischten Träger umfasst; und
Übertragen (S230), durch die Netzwerkvorrichtung, der Ressourcenkonfigurationsinformationen an das erste Endgerät,
wobei die Ressourcenkonfigurationsinformationen zum Angeben der ersten Übertragungsressource verwendet werden,
die erste Übertragungsressource durch das Endgerät dazu ausgelegt ist, eine zweite Übertragungsressource zu bestimmen, und
die zweite Übertragungsressource dazu ausgelegt ist, dass das erste Endgerät Daten an ein zweites Endgerät überträgt;
**dadurch gekennzeichnet, dass** eine Zeitbereichsressource der zweiten Übertragungsressource durch das erste Endgerät gemäß der Übertragungsleistung des ersten Endgerätes bestimmt wird,
wobei, wenn die Übertragungsleistung des ersten Endgerätes größer als oder gleich einer voreingestellten Leistung ist, sich mehrere Träger in der zweiten Übertragungsressource in einem Zeitbereich überlappen, und/oder
wenn die Übertragungsleistung des ersten Endgerätes geringer ist als die voreingestellte Leistung, sich mehrere Träger in der zweiten Übertragungsressource in einem Zeitbereich nicht überlappen.

9. Endgerät (400), umfassend:
eine Übertragungseinheit (410), die dazu ausgelegt ist, eine Anforderungsnachricht an eine Netzwerkvorrichtung zu übertragen,
wobei die Anforderungsnachricht Anforderungsinformationen gemischter Trägern umfasst,
wobei die Anforderungsinformationen der gemischten Träger verwendet werden, um die Netzwerkvorrichtung aufzufordern, dem Endgerät mehrere Träger zuzuweisen,
die mehreren Träger mindestens zwei Typen aufweisen und die mehreren Träger einen gemischten Träger und einen dedizierten Träger umfassen, wobei der gemischte Träger für einen Uplink, "UL", einen Downlink, "DL", und einen Sidelink, "SL", ausgelegt ist, der dedizierte Träger nur für den SL ausgelegt ist und der SL die Datenübertragung zwischen verschiedenen Endgeräten repräsentiert;
eine Empfangseinheit (420), die dazu ausgelegt ist, Ressourcenkonfigurationsinformationen zu empfangen, die von der Netzwerkvorrichtung gemäß der Anforderungsnachricht übertragen werden, wobei die Ressourcenkonfigurationsinformationen zum Angeben einer ersten Übertragungsressource verwendet werden, die dem Endgerät durch die Netzwerkvorrichtung zugewiesen wird, und die erste Übertragungsressource eine Ressource auf dem gemischten Träger umfasst;
eine Bestimmungseinheit (430), die dazu ausgelegt ist, eine zweite Übertragungsressource basierend auf der ersten Übertragungsressource zu bestimmen; und
die Übertragungseinheit ferner dazu ausgelegt ist, Daten an ein zweites Endgerät durch die zweite Übertragungsressource zu übertragen;
**dadurch gekennzeichnet, dass** eine Zeitbereichsressource der zweiten Übertragungsressource durch das erste Endgerät gemäß der Übertragungsleistung des ersten Endgerätes bestimmt wird,
wobei, wenn die Übertragungsleistung des Endgerätes größer als oder gleich einer voreingestellten Leistung ist, sich mehrere Träger in der zweiten Übertragungsressource in einem Zeitbereich überlappen, und/oder
wenn die Übertragungsleistung des Endgerätes geringer ist als die voreingestellte Leistung, sich mehrere Träger in der zweiten Übertragungsressource in einem Zeitbereich nicht überlappen.

10. Endgerät (400) nach Anspruch 9, wobei die Anforderungsnachricht ferner gemeinsam genutzte Ressourcenpoolinformationen und eine erste Gültigkeitszeit umfasst, wobei die gemeinsam genutzten Ressourcenpoolinformationen zum Angeben eines gemeinsam genutzten Ressourcenpools, der dem dedizierten Träger des ersten Endgerätes entspricht, verwendet werden, wobei die erste Gültigkeitszeit zum Angeben einer Gültigkeitszeit des gemeinsam genutzten Ressourcenpools dient.

11. Endgerät (400) nach Anspruch 9 oder 10, wobei die Ressourcenkonfigurationsinformationen eine zweite Gültigkeitszeit umfassen, wobei die zweite Gültigkeitszeit zum Angeben einer Gültigkeitszeit der ersten Übertragungsressource dient.

12. Endgerät (400) nach Anspruch 10 oder 11, wobei die gemeinsam genutzten Ressourcenpoolinformationen Zeitbereichsinformationen des gemeinsam genutzten Ressourcenpools umfassen.

13. Netzwerkvorrichtung (500), umfassend:
eine Empfangseinheit (510), die dazu ausgelegt ist, eines Anforderungsnachricht von einem ersten Endgerät zu empfangen,
wobei die Anforderungsnachricht Anforderungsinformationen gemischter Trägern umfasst,
wobei die Anforderungsinformationen der gemischten Träger verwendet werden, um die Netzwerkvorrichtung aufzufordern, dem ersten Endgerät mehrere Träger zuzuweisen,
die mehreren Träger mindestens zwei Typen aufweisen und die mehreren Träger einen gemischten Träger und einen dedizierten Träger umfassen, wobei der gemischte Träger für einen Uplink, "UL", einen Downlink, "DL", und einen Sidelink, "SL", ausgelegt ist, der dedizierte Träger nur für den SL ausgelegt ist und der SL die Datenübertragung zwischen verschiedenen Endgeräten repräsentiert;
eine Verarbeitungseinheit (520), die dazu ausgelegt ist, dem ersten Endgerät eine erste Übertragungsressource gemäß der Anforderungsnachricht zuzuweisen, wobei die erste Übertragungsressource eine Ressource auf dem gemischten Träger umfasst; und
eine Übertragungseinheit (530), die dazu ausgelegt ist, Ressourcenkonfigurationsinformationen an das erste Endgerät zu übertragen,
wobei die Ressourcenkonfigurationsinformationen zum Angeben der ersten Übertragungsressource verwendet werden,
die erste Übertragungsressource durch das Endgerät dazu ausgelegt ist, eine zweite Übertragungsressource zu bestimmen, und
die zweite Übertragungsressource dazu ausgelegt ist, dass das erste Endgerät Daten an ein zweites Endgerät überträgt;
**dadurch gekennzeichnet, dass** eine Zeitbereichsressource der zweiten Übertragungsressource durch das erste Endgerät gemäß der Übertragungsleistung des ersten Endgerätes bestimmt wird,
wobei, wenn die Übertragungsleistung des ersten Endgerätes größer als oder gleich einer voreingestellten Leistung ist, sich mehrere Träger in der zweiten Übertragungsressource in einem Zeitbereich überlappen, und/oder
wenn die Übertragungsleistung des ersten Endgerätes geringer ist als die voreingestellte Leistung, sich mehrere Träger in der zweiten Übertragungsressource in einem Zeitbereich nicht überlappen.

14. Netzwerkvorrichtung nach Anspruch 13, wobei die Anforderungsnachricht ferner gemeinsam genutzte Ressourcenpoolinformationen und eine erste Gültigkeitszeit umfasst, wobei die gemeinsam genutzten Ressourcenpoolinformationen zum Angeben eines gemeinsam genutzten Ressourcenpools, der dem dedizierten Träger des ersten Endgerätes entspricht, verwendet werden, und die erste Gültigkeitszeit zum Angeben einer Gültigkeitszeit des gemeinsam genutzten Ressourcenpools dient.

15. Netzwerkvorrichtung nach Anspruch 13 oder 14, wobei die Ressourcenkonfigurationsinformation eine zweite Gültigkeitszeit umfasst, und die zweite Gültigkeitszeit zum Angeben einer Gültigkeitszeit der ersten Übertragungsressource dient.

## Revendications

1. Procédé d'attribution de ressources, comprenant :
la transmission (S110), par un premier dispositif terminal, d'un message de demande à un dispositif de réseau,
le message de demande comprenant des informations de demande de porteuse mixte,
les informations de demande de porteuse mixte étant utilisées pour demander au dispositif de réseau d'attribuer des multiples porteuses au premier dispositif terminal,
les multiples porteuses ayant au moins deux types et les multiples porteuses comprenant une porteuse mixte et une porteuse dédiée, la porteuse mixte étant configurée pour une liaison montante, « UL », une liaison descendante, « DL », et une liaison latérale, « SL », la porteuse dédiée étant configurée pour une SL uniquement, et la SL représentant la transmission de données entre différents dispositifs terminaux ;
la réception (S120), par le premier dispositif terminal, d'informations de configuration de ressource transmises par le dispositif de réseau en fonction du message de demande, les informations de configuration de ressource étant utilisées pour indiquer une première ressource de transmission attribuée au premier dispositif terminal par le dispositif de réseau et la première ressource de transmission comprenant une ressource sur la porteuse mixte ;
la détermination (S130), par le premier dispositif terminal, d'une deuxième ressource de transmission sur la base de la première ressource de transmission ; et
la transmission (S140), par le premier dispositif terminal, de données à un deuxième dispositif terminal par l'intermédiaire de la deuxième ressource de transmission ;
**caractérisé en ce qu'**une ressource du domaine temporel de la deuxième ressource de transmission est déterminée par le premier dispositif terminal en fonction de la puissance de transmission du premier dispositif terminal,
lorsque la puissance de transmission du premier dispositif terminal est supérieure ou égale à une puissance prédéfinie, de multiples porteuses dans la deuxième ressource de transmission se chevauchant dans un domaine temporel, et/ou
lorsque la puissance de transmission du premier dispositif terminal est inférieure à la puissance prédéfinie, de multiples porteuses dans la deuxième ressource de transmission ne se chevauchant pas dans un domaine temporel.

2. Procédé selon la revendication 1, le message de demande comprenant en outre des informations de groupe de ressources partagées et un premier temps valide, les informations de groupe de ressources partagées étant utilisées pour indiquer un groupe de ressources partagées correspondant à la porteuse dédiée du premier dispositif terminal, et le premier temps valide étant destiné à indiquer un temps valide du groupe de ressources partagées.

3. Procédé selon la revendication 1 ou 2, les informations de configuration de ressource comprenant un second temps valide, et le second temps valide étant destiné à indiquer un temps valide de la première ressource de transmission.

4. Procédé selon la revendication 1 ou 2, les informations de groupe de ressources partagées comprenant des informations de domaine temporel du groupe de ressources partagées.

5. Procédé selon la revendication 4, la première ressource de transmission ne se chevauchant pas avec une ressource dans le groupe de ressources partagées dans le domaine temporel.

6. Procédé selon l'une quelconque des revendications 1 à 5, la détermination, par le premier dispositif terminal, de la deuxième ressource de transmission sur la base de la première ressource de transmission comprenant :
la détermination, par le premier dispositif terminal, de la deuxième ressource de transmission sur la base de la première ressource de transmission et en fonction d'une règle prédéfinie, la règle prédéfinie comprenant au moins l'un parmi : un résultat de rapport d'occupation de canal, « CBR », la priorité d'un service entre le premier dispositif terminal et le deuxième dispositif terminal, et une capacité du premier dispositif terminal dans la transmission simultanée des multiples porteuses.

7. Procédé selon l'une quelconque des revendications 1 à 6, comprenant en outre :
la réception, par le premier dispositif terminal, de données transmises par un troisième dispositif terminal, les données étant transmises par le troisième dispositif terminal en utilisant une troisième ressource de transmission, la troisième ressource de transmission comprenant la porteuse mixte.

8. Procédé d'attribution de ressources, comprenant :
la réception (S210), par un dispositif de réseau, d'un message de demande provenant d'un premier dispositif terminal,
le message de demande comprenant des informations de demande de porteuse mixte,
les informations de demande de porteuse mixte étant utilisées pour demander au dispositif de réseau d'attribuer des multiples porteuses au premier dispositif terminal,
les multiples porteuses ayant au moins deux types et les multiples porteuses comprenant une porteuse mixte et une porteuse dédiée, la porteuse mixte étant configurée pour une liaison montante, « UL », une liaison descendante, « DL », et une liaison latérale, « SL », la porteuse dédiée étant configurée pour la SL uniquement, et la SL représentant la transmission de données entre différents dispositifs terminaux ;
l'attribution (S220), par le dispositif de réseau, d'une première ressource de transmission au premier dispositif terminal en fonction du message de demande, la première ressource de transmission comprenant une ressource sur la porteuse mixte ; et
la transmission (S230), par le dispositif de réseau, d'informations de configuration de ressource au premier dispositif terminal,
les informations de configuration de ressource étant utilisées pour indiquer la première ressource de transmission,
la première ressource de transmission étant configurée pour que le premier dispositif terminal détermine une deuxième ressource de transmission, et
la deuxième ressource de transmission étant configurée pour que le premier dispositif terminal transmette des données à un deuxième dispositif terminal ;
**caractérisé en ce qu'**une ressource dans le domaine temporel de la deuxième ressource de transmission est déterminée par le premier dispositif terminal en fonction de la puissance de transmission du premier dispositif terminal,
lorsque la puissance de transmission du premier dispositif terminal est supérieure ou égale à une puissance prédéfinie, de multiples porteuses dans la deuxième ressource de transmission se chevauchant dans un domaine temporel, et/ou
lorsque la puissance de transmission du premier dispositif terminal est inférieure à la puissance prédéfinie, de multiples porteuses dans la deuxième ressource de transmission ne se chevauchant pas dans un domaine temporel.

9. Dispositif terminal (400), comprenant :
une unité de transmission (410), configurée pour transmettre un message de demande à un dispositif de réseau,
le message de demande comprenant des informations de demande de porteuse mixte,
les informations de demande de porteuse mixte étant utilisées pour demander au dispositif de réseau d'attribuer des multiples porteuses au dispositif terminal,
les multiples porteuses ayant au moins deux types et les multiples porteuses comprenant une porteuse mixte et une porteuse dédiée, la porteuse mixte étant configurée pour une liaison montante, « UL », une liaison descendante, « DL », et une liaison latérale, « SL », la porteuse dédiée étant configurée pour la SL uniquement, et la SL représentant la transmission de données entre différents dispositifs terminaux ;
une unité de réception (420), configurée pour recevoir des informations de configuration de ressource transmises par le dispositif de réseau en fonction du message de demande, les informations de configuration de ressource étant utilisées pour indiquer une première ressource de transmission attribuée au dispositif terminal par le dispositif de réseau, et la première ressource de transmission comprenant une ressource sur la porteuse mixte,
une unité de détermination (430), configurée pour déterminer une deuxième ressource de transmission sur la base de la première ressource de transmission ; et
l'unité de transmission étant en outre configurée pour transmettre des données à un deuxième dispositif terminal par l'intermédiaire de la deuxième ressource de transmission ;
**caractérisé en ce qu'**une ressource dans le domaine temporel de la deuxième ressource de transmission est déterminée par le premier dispositif terminal en fonction de la puissance de transmission du premier dispositif terminal,
lorsque la puissance de transmission du dispositif terminal est supérieure ou égale à une puissance prédéfinie, de multiples porteuses dans la deuxième ressource de transmission se chevauchant dans un domaine temporel, et/ou
lorsque la puissance de transmission du dispositif terminal est inférieure à la puissance prédéfinie, de multiples porteuses dans la deuxième ressource de transmission ne se chevauchant pas dans un domaine temporel.

10. Dispositif terminal (400) selon la revendication 9, le message de demande comprenant en outre des informations de groupe de ressources partagées et un premier temps valide, les informations de groupe de ressources partagées étant utilisées pour indiquer un groupe de ressources partagées correspondant à la porteuse dédiée du premier dispositif terminal, et le premier temps valide étant destiné à indiquer un temps valide du groupe de ressources partagées.

11. Dispositif terminal (400) selon la revendication 9 ou 10, les informations de configuration de ressource comprenant un second temps valide, le second temps valide étant destiné à indiquer un temps valide de la première ressource de transmission.

12. Dispositif terminal (400) selon la revendication 10 ou 11, les informations de groupe de ressources partagées comprenant des informations de domaine temporel du groupe de ressources partagées.

13. Dispositif de réseau (500), comprenant :
une unité de réception (510), configurée pour recevoir un message de demande provenant d'un premier dispositif terminal,
le message de demande comprenant des informations de demande de porteuse mixte,
les informations de demande de porteuse mixte étant utilisées pour demander au dispositif de réseau d'attribuer des multiples porteuses au premier dispositif terminal,
les multiples porteuses ayant au moins deux types et les multiples porteuses comprenant une porteuse mixte et une porteuse dédiée, la porteuse mixte étant configurée pour une liaison montante, « UL », une liaison descendante, « DL », et une liaison latérale, « SL », la porteuse dédiée étant configurée pour la SL uniquement, et la SL représentant la transmission de données entre différents dispositifs terminaux ;
une unité de traitement (520), configurée pour attribuer une première ressource de transmission au premier dispositif terminal en fonction du message de demande, la première ressource de transmission comprenant une ressource sur la porteuse mixte, et
une unité de transmission (530), configurée pour transmettre des informations de configuration de ressource au premier dispositif terminal,
les informations de configuration de ressource étant utilisées pour indiquer la première ressource de transmission,
la première ressource de transmission étant configurée pour que le premier dispositif terminal détermine une deuxième ressource de transmission, et
la deuxième ressource de transmission étant configurée pour que le premier dispositif terminal transmette des données à un deuxième dispositif terminal ;
**caractérisé en ce qu'**une ressource dans le domaine temporel de la deuxième ressource de transmission est déterminée par le premier dispositif terminal en fonction de la puissance de transmission du premier dispositif terminal,
lorsque la puissance de transmission du premier dispositif terminal est supérieure ou égale à une puissance prédéfinie, de multiples porteuses dans la deuxième ressource de transmission se chevauchant dans un domaine temporel, et/ou
lorsque la puissance de transmission du premier dispositif terminal est inférieure à la puissance prédéfinie, de multiples porteuses dans la deuxième ressource de transmission ne se chevauchant pas dans un domaine temporel.

14. Dispositif de réseau selon la revendication 13, le message de demande comprenant en outre des informations de groupe de ressources partagées et un premier temps valide, les informations de groupe de ressources partagées étant utilisées pour indiquer un groupe de ressources partagées correspondant à la porteuse dédiée du premier dispositif terminal, et le premier temps valide étant destiné à indiquer un temps valide du groupe de ressources partagées.

15. Dispositif de réseau selon la revendication 13 ou 14, les informations de configuration de ressource comprenant un second temps valide, et le second temps valide étant destiné à indiquer un temps valide de la première ressource de transmission.
